# EUROPEAN PATENT APPLICATION

(11) **EP 4 703 906 A1**
(43) Date of publication of application: **04.03.2026**
(21) Application number: 25197464.8
(22) Date of filing: 21.08.2025
(51) Int. Cl.: G06F 16/3329, G06F 16/9032, G06F 16/903, G06N 3/08, H04B 7/185

(54) **OFFLOADING AVIATION OPERATIONS PERSONNEL COMMUNICATION**

(30) Priority: 03.09.2024 US 202418823265
(71) Applicant: ARINC Incorporated, Annapolis, MD 21401 (US)
(72) Inventor: ANDERSON, Ross, Laveville, Minnesota 55044 (US); CHAKRAVARTY, Subhashish, Marion, Iowa 52302 (US)
(74) Representative: Dehns

(57) **Abstract**

Systems, devices, methods, and computer-readable media provide improved aviation operations management communications. A method includes receiving, from a first two-way wireless communications device and at a communications manager, a first communication, determining, by the communications manager, that the first communication includes (i) a question or (ii) a standard communication that has a standard response in accord with two-way radio transceiver etiquette, responsive to determining that the first communication includes the question or (i) a question or (ii) a standard communication that has a standard response in accord with two-way radio transceiver etiquette, generating, by the communications manager, a response to the first communication, and transmitting the response to the first two-way wireless communications device.

## Description

### TECHNICAL FIELD

Embodiments regard reducing an amount of communication between aviation operations personnel using voice-to-text, large language model (LLM), and aviation operations environment data.

### BACKGROUND

Airport and other aviation operations management operations still commonly use two-way radios for communication between employees. This communication is often cumbersome and sometimes unnecessary. The communication can consume personnel time to answer questions that do not require a human to answer.

### BRIEF DESCRIPTION OF DRAWINGS

FIG. 1 illustrates, by way of example, a diagram of an embodiment of a system for aviation operations management communications.
FIG. 2 illustrates, by way of example, a diagram of an embodiment of a system for offloading aviation operations management personnel communications.
FIG. 3 illustrates, by way of example, a diagram of an embodiment of he communications manager.
FIG. 4 illustrates, by way of example, a diagram of an embodiment of a method for improved two-way communications.
FIG. 5 is a block diagram of an example of an environment including a system for neural network (NN) training.
FIG. 6 illustrates, by way of example, a block diagram of an embodiment of a machine in the example form of a computer system within which instructions, for causing the machine to perform any one or more of the methods or techniques discussed herein, may be executed.

### DETAILED DESCRIPTION

The following description and the drawings sufficiently illustrate teachings to enable those skilled in the art to practice them. Other embodiments may incorporate structural, logical, electrical, process, and other changes. Portions and features of some examples may be included in, or substituted for, those of other examples. Teachings set forth in the claims encompass all available equivalents of those claims.

Embodiments may be implemented in one or a combination of hardware, firmware and software. Embodiments may also be implemented as instructions stored on a computer-readable storage device, which may be read and executed by at least one processor to perform the operations described herein. A computer-readable storage device may include any non-transitory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. Some embodiments may include one or more processors and may be configured with instructions stored on a computer-readable storage device.

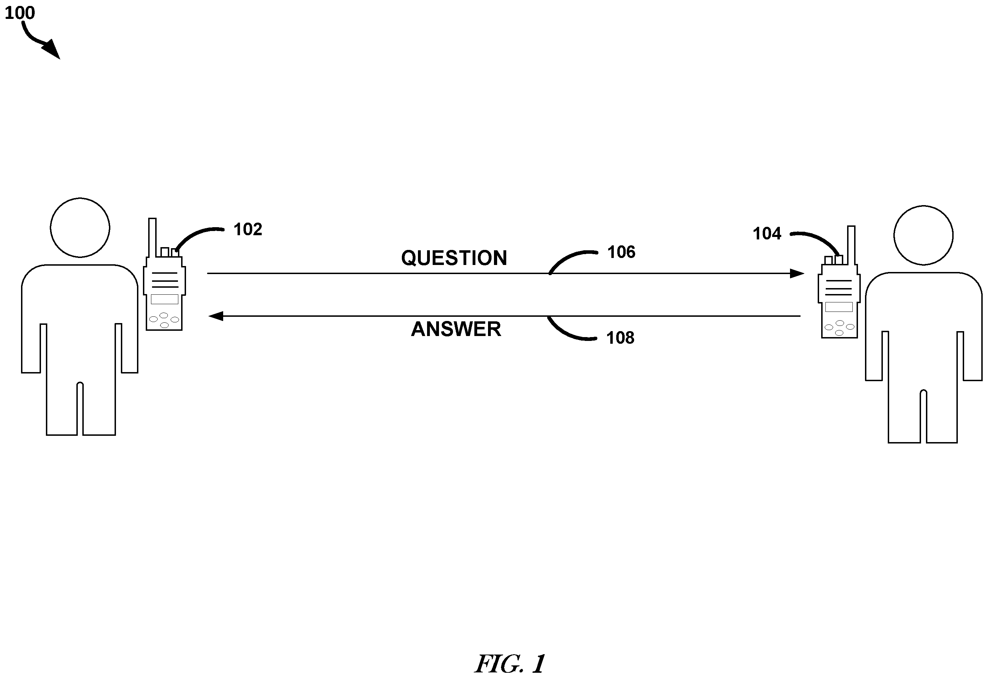

FIG. 1 illustrates, by way of example, a diagram of an embodiment of a system 100 for aviation operations management communications. The system 100 as illustrated includes handheld transceivers 102, 104 through which users communicate. The communications over the handheld transceivers 102, 104 regard questions 106, aviation operations management conditions (e.g., status of baggage management, fuel management, food management, cleaning, vehicles (e.g., airplanes, pushback vehicles, fuel trucks, de-ice trucks, maintenance vehicles, or the like), gate status (e.g., occupied, unoccupied, boarding or not, boarded, gate closed, or the like), or the like, personal communications, standard communications (e.g., "radio check", "go ahead", "stand-by", "roger", "ten four", "negative", "affirmative", "say again", "over", "out", "break, break, break", "read you loud and clear", "come in", "copy", "wilco", or the like), or the like.

Often a standard communication from one transceiver causes a response that is a standard communication from another transceiver. Often, a question 106 from one transceiver 102 regards information that is known and stored in a database. Another transceiver 104 is used, by other aviation operations management personnel, to respond to the question 106 with an answer 108. Such questions, herein called "objective questions", can be managed without consuming personnel time or effort. Offloading at least some of the standard communications and objective questions from aviation operations management personnel communications can free them up to perform their job better, more efficiently, or focus on more complex or important tasks.

Offloading such communications from aviation operations personnel is not a trivial task. Which communications get offloaded? How does one respond to a radio communication without human input after deployment? Embodiments leverage a communications manager and a large language model (LLM) to automatically (e.g., without human interference after deployment) offload at least some of the communications from aviation operations personnel. Embodiments extend the effectiveness of aviation operations management personnel with minimal hardware adoption. The existing transceivers are used to initiate an LLM prompt that causes the LLM to query a knowledge graph. The LLM then generates a response as if it were the aviation operations management personnel that was to receive the communication. A communications manager then causes a transceiver to respond as if it were the different aviation operations management personnel.

Embodiments provide one or more advantages including one or more of: (i) Increasing a capability of existing devices by adding a "virtual layer" that manages communications, (ii) a low cost implementation that augments hardware already in use, (iii) easy information access from systems of record without waiting for loads, and (iv) allows information to be gathered while moving or performing other tasks. Embodiments are useful beyond aviation operations personnel management, such as by the military, space programs, or the like.

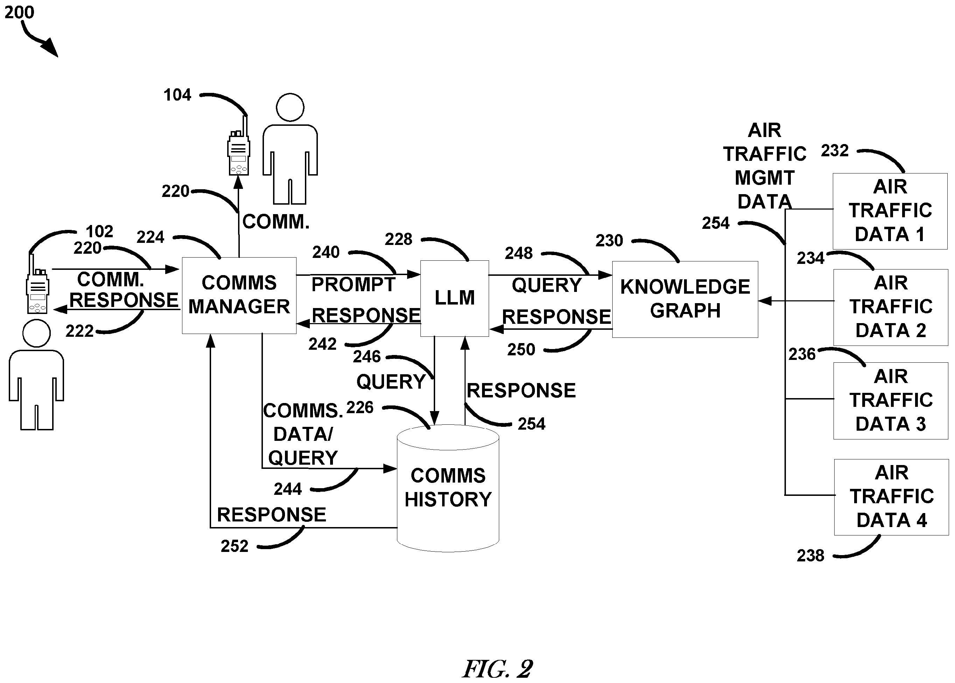

FIG. 2 illustrates, by way of example, a diagram of an embodiment of a system 200 for offloading aviation operations management personnel communications. The system 200 as illustrated includes the handheld transceivers 102, 104, a communications manager 224, a communications history database 226, an LLM 228, a knowledge graph 230, and aviation operations management applications 232, 234, 236, 238. The communications manager 224 receives communications 220 from one or more the handheld transceivers 102, 104. The communications manager 224 generates a prompt 240 and provides the prompt to the LLM 228. The communications manager 224 stores communications data 244 in the communications history database 226. The LLM generates a query 248 based on the prompt 240. The query 248 is executed against the knowledge graph 230 to generate a response 250. The response 250 is provided to the LLM 228. The LLM 228 reformulates the response 250 into a response 242 that is consistent with handheld transceiver communications etiquette. The communications manager 224 provides a response 222, based on the response 242, as if it were the intended recipient of the communication 220.

The communications manager 224 is responsible for determining which communications 220 to offload. For communications that are to be offloaded (handled by the system 200 without requiring human interference), the communications manager 224 generates the response 222. For communications that are not to be offloaded, the communications manager 224 forwards the communication 220 to the destination transceiver 104.

Sometimes the communications manager 224 leverages the LLM 228 in generating the response 222. When the communications manager 224 determines that the communication 220 is (i) not a standard communication with a standard answer and (ii) there is a question in the communication, the communications manager 224 can leverage the LLM 228 to help generate the response 242. In such instances, the communications manager 224 generates a prompt 240. The prompt 240 is engineered to cause the LLM 228 to generate a query 246 to the communications history database 226, generate a query 248 to the knowledge graph 230, or a combination thereof. The goal of the prompt 240 is to get the LLM 228 to determine an answer to a question posed in the communication 220. The prompt 240 can indicate one or more schemas that are to be used in generating one or more of the queries 246, 248. The prompt 240 can include data describing what types of data are stored in each of the knowledge graph 230 and the communications history database 226. The prompt 240 can include examples indicating when to query which of the knowledge graph 230, the communications history database 226, or a combination thereof.

Sometimes the communications manager 224 leverages the communications history database 226 in generating the response. When the communications manager 224 determines the communication 220 is a standard communication with a standard response, the communications manager 224 can issue a query 244 to the communications history database 226. The communications history database 226 provides a response 252 to the query 244. The response 252 can be the standard response that is historically provided responsive to the standard communication. The standard communications and standard responses are finite in number. The standard communications and standard responses can be stored in the communications history database 226. Example standard communications include, for example, "radio check", "go ahead", "stand-by", "roger", "ten four", "negative", "affirmative", "say again", "over", "out", "break, break, break", "read you loud and clear", "come in", "copy", "wilco", or the like.

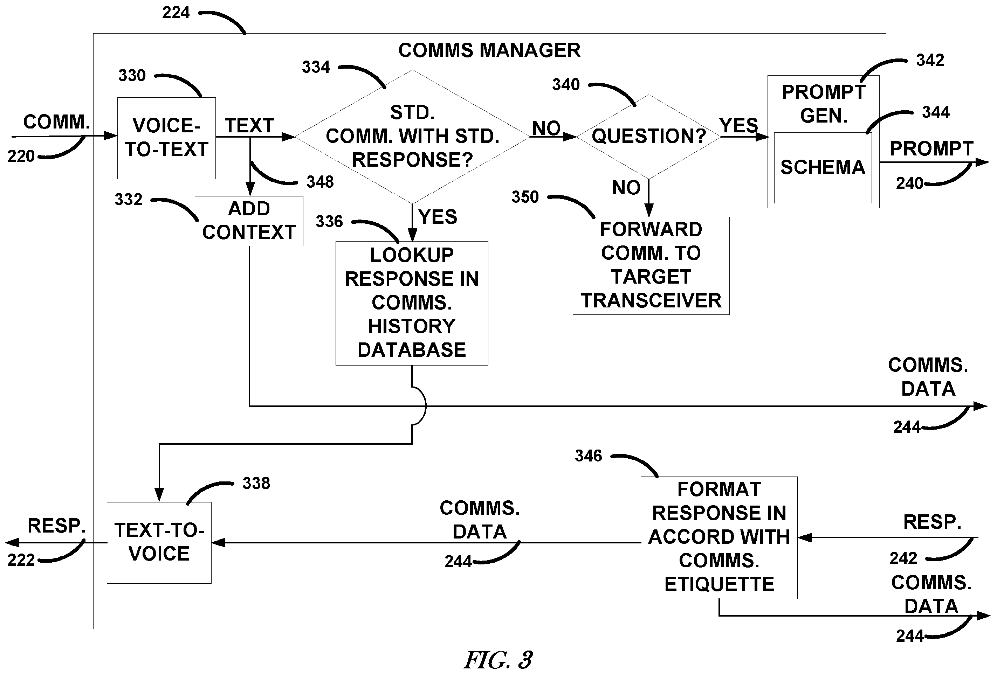

The communications manager 224 includes software and hardware. The software performs communications formatting and analysis. The hardware receives the communications 220, issues the prompt to the LLM 228, stores the communications data 244 in the communications history database 226, and among other operations. More details regarding the communications manager 224 are provided in FIG. 3.

The LLM 228 can be a generative language model or other model that is instruction-tuned to converse with a human user, a foundational generative artificial intelligence (AI) model, such as a small language model (SLM), multimodal vison-language model, or the like. LLMs are computational models that are trained to take text as input and predict a next word or token. Examples of generative agents include the GPT series of models from OpenAI, such as GPT-3, GPT-3.5, GPT-4, or Gemini, LLaMa, and Claude, among others, from other entities. SLMs are similar to LLMs but consume less memory and typically operate to make decisions faster than LLMs. For example, LLMs typically include trillions of parameters while SLMs include billions of parameters. Mistral 7B is an example SLM. Examples of multimodal vision-language model include Contrast Language-Image Pretraining and Vision-and-Language BERT.

The LLM 228 receives the prompt 240 from the communications manager 224. The LLM 228 generates a query 246, 248 in accord with the prompt 240 from the communications manager 224. The query 246 is issued to the communications history database 226. The query 246 can be for a standard response 254 to a standard communication, a conversation history or a portion thereof, or the like. The query 248 is issued to the knowledge graph 230. The query 248 can be for data regarding the state of the aviation operations being managed by the users of the transceivers 102, 104. The response 250 indicates the state of the aviation operations queried by the LLM 228 or an indication that the state is unknown.

The knowledge graph 230 includes a plurality of nodes connected by edges. There can be multiple node and multiple edge types in the knowledge graph 230. An edge between two nodes indicates that there is a relationship between the entities represented by the two nodes. The type of the edge indicates the nature of the relationship between entities represented by the two nodes.

The knowledge graph 230 can be implemented using a semantic database. A semantic database is a database management system. The semantic database allows storing, querying, and managing structured data. Semantic database is often referred to by synonyms, such as semantic graph database, reasoner, ontology server, semantic store, metadata store, resource description framework (RDF) database, RDF triplestore and more. Different wording often emphasizes the particular features and usages, rather than a difference in the implementation and performance. A major benefit of semantic databases, compared to traditional database management system (DBMSs) such as relational DBMSs (RDBMSs), is the usage of semantic data schema paradigm, called ontology, which is stored and managed independently from the data. The ontology allows a user to change the data schema "on the fly" without interfering with the data, automatically discover new facts and build new data based on semantic rules (data inference or reasoning), seamlessly integrate data from distributed data sets and data sources (data federation), see the data as flexible, interconnected, interlinked graph data models. As a result, semantic databased offer easier data integration of diverse sources as well as more analytical power.

The knowledge graph 230 for aviation operations management can receive aviation operations management data 254. The aviation operations management data 254 can be received through multiple aviation operations data generating applications 232, 234, 236, 238. Example aviation operations data applications include (i) real-time aviation operations applications, (ii) aviation operations scheduling applications, (iii) aviation operations facility modeling applications, and (iv) weather reporting and forecasting applications. These applications can provide data regarding current aircraft location, speed, planned flight path, atmospheric conditions, scheduled time of arrival, scheduled time of departure, actual departure, gate to receive the aircraft, state of the gate to receive the aircraft, state of fuel truck, food truck, baggage truck, pushback vehicle, deicer truck, personnel operating the trucks, gate agents, flight attendants, pilots, among other flight management relevant data. The knowledge graph 230 organizes the data 254 from the applications 232, 234, 236, 238 into a relational graph based on semantic rules and relations.

FIG. 3 illustrates, by way of example, a diagram of an embodiment of the communications manager 224. The communications manager 224 as illustrated includes a voice-to-text operator 330, an add context operator 332, a lookup operator 336, a forward operator 350, a prompt generator 342, a formatter 346, and a text-to-voice operator 338. The voice-to-text operator 330 receives the communication 220, in audio form, and converts it to text 348. Text-to-voice techniques are known.

The text 348 is provided to an add context operator 332. The add context operator 332 adds metadata to the text 348. The metadata can include an entity identifier that indicates the transceiver 102, 104 that issued the communication 220, a time at which the communication 220 was generated, a location at which the communication 220 was generated, an entity identifier that indicate the transceiver 102, 104 to which the communication 220 was issued, an object identifier indicating an object that is the subject of the communication 220, among other metadata. The metadata and the text 348 can jointly form communications data 244. The communications data 244 can be stored in the communications history database 226 and associated with a conversation identifier.

The text 348 is provided to an operator 334 that determines whether the communication is a standard communication that can be handled with a standard response. If so, the lookup operator 336 identifies a response in the communications history database 226. The response in the communications history database 226 does not need to be associated with an identical communication. Instead, the response can be associated with a communication that is semantically similar (e.g., based on some semantic distance metric, such as a cosine similarity or angular distance in a semantic space). The operator 336 can further alter the identified standard response to be consistent with the text 348. The alteration can include replacing an object, entity, or the like to be consistent with the standard communication. The altered standard response (or the standard response without alteration) is then provided to the text-to-voice operator 338 to convert the text-based response to a response 222 in audio form. If not, an operator 340 determines whether the text 348 includes a question.

If the text 348 includes a question that is not personal (a not personal question in this context is a question that does not regard aviation operations management), a prompt generator 342 fills out a prompt 240 based on the text 348 and a schema 344. If the question is personal, or if the text 348 does not include a question, the forward operator can forward the communication 220 to a target transceiver. The operator 350 can provide the text 348 to the text-to-voice operator 338 or can transmit the audio form of the communication 220 if the audio form is available.

The prompt generator 342 receives the text 348 and fills out the schema 344 based on the text 348. The schema 344 identifies a goal of the LLM 228. The schema 344 identifies items that can be included in the prompt 240 if circumstances warrant such inclusion. The items can include a schema of a query 248 for the knowledge graph 230, a schema of a query 246 for the communications history database 226, or the like. The schema 344 is a template to be filled in by the prompt generator 342 based on the text 348 and context from the operator 332. The schema 344 can include stock language that indicates that the goal of the LLM 228 is to determine or generate an answer to a question in the text 348. The schema 344 can provide the question from the text 348. The schema 344 can provide context to the LLM 228 indicating that the question regards aircraft management at a specific facility, types of data available in the knowledge graph 230, types of data available in the communications history database 226, circumstances under which each of the knowledge graph 230 and the communications history database 226 can provide answers to the question, limitations of the LLM (e.g., do not generate an image, do not generate a song, only answer the question with text, or the like). The prompt 240 is then provided to the LLM 228.

The LLM 228 provides a response 242 to the prompt 240. The response 242 is formatted by the formatting operator 346. The formatting operator 346 can format the response 242 to be consistent with transceiver communications etiquette. Alternative, to using the formatting operator 346, the LLM 228 can be prompted to format the response 242 in accord with transceiver communications etiquette. The prompt 240 can thus include rules of transceiver etiquette or the LLM 228 can be instructed to format the response consistent with example communications in the communications history database 226. The formatted response can be stored in the communications history database 226 as communications data 244. The communications data 244 from the LLM 228 or the operator 346 can be associated with the communications data 244 associated with the communication 220. The communications data 244 can be converted to audio by the text-to-voice operator 338. The communications data 244 can be provided as a response 222 to the transceiver 102, 104 that issued the communication 220.

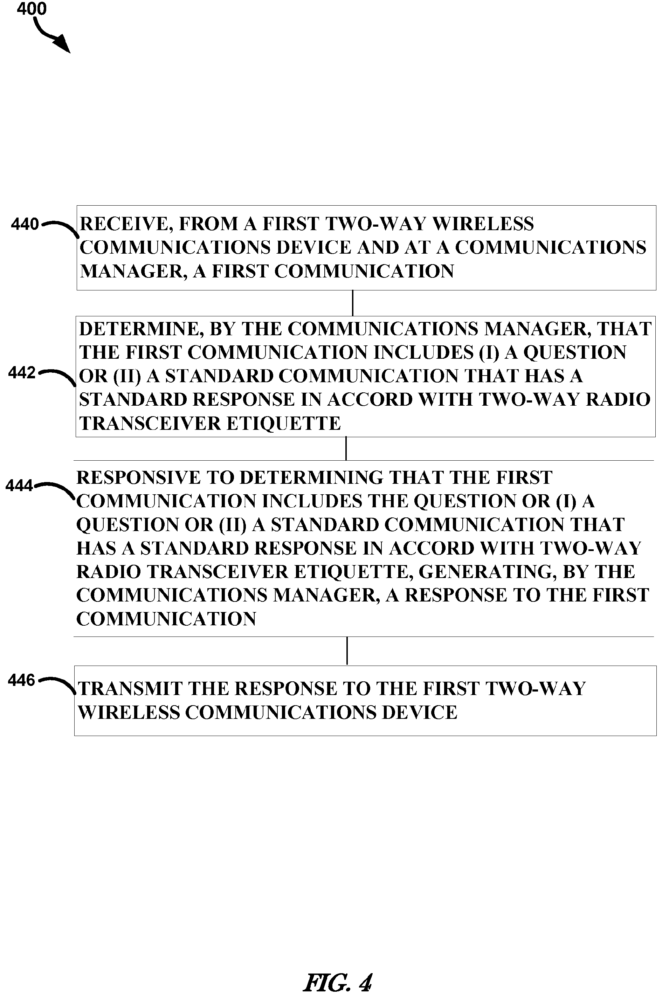

FIG. 4 illustrates, by way of example, a diagram of an embodiment of a method 400 for improved two-way communications. The method 400 as illustrated includes receiving, from a first two-way wireless communications device and at a communications manager, a first communication, at operation 440; determining, by the communications manager, that the first communication includes (i) a question or (ii) a standard communication that has a standard response in accord with two-way radio transceiver etiquette, at operation 442; responsive to determining that the first communication includes the question or (i) a question or (ii) a standard communication that has a standard response in accord with two-way radio transceiver etiquette, generating, by the communications manager, a response to the first communication, at operation 444; and transmitting the response to the first two-way wireless communications device, at operation 446.

The operation 442 can include determining the first communication includes a question. The method 400 can further include, responsive to determining the first communication includes a question generating a prompt for a large language model (LLM) to answer the question. The prompt can be engineered to cause the LLM to issue a query to a knowledge graph, a communications history database, an application programming interface (API), or a combination thereof. The prompt can include a first schema for querying the knowledge and a second schema for querying the communications history database. The operation 444 can include receiving, by the communications manager, a response to the prompt. The operation 444 can further include altering, by the communications manager, the response in accord with two-way transceiver etiquette resulting in an altered response. The operation 444 can further include converting, by the communications manager, the altered response from text form to audio form resulting in an altered audio response.

The operation 442 can include determining, by the communications manager, that the first communication includes a standard communication that has a standard response in accord with two-way radio transceiver etiquette. The operation 444 can include determining, by the communications manager issuing a query of a communications history database, the standard response. The knowledge graph can include nodes that represent respective objects of aviation operations management and edges that represent relationships between the objects, wherein the knowledge graph is populated by applications that manage aviation operations facility data in real time.

While the application is presented with regard to offloading two-transceiver communications, other voice interactions can be offloaded similarly. Such voice interactions include interactions with chatbots, apps, or the like.

AI is a field concerned with developing decision-making systems to perform cognitive tasks that have traditionally required a living actor, such as a person. NNs are computational structures that are loosely modeled on biological neurons. Generally, NNs encode information (e.g., data or decision making) via weighted connections (e.g., synapses) between nodes (e.g., neurons). Modern NNs are foundational to many AI applications, such as classification, device behavior modeling (as in the present application) or the like. The communications manager 224, LLM 228, or other component or operation can include or be implemented using one or more NNs.

Many NNs are represented as matrices of weights (sometimes called parameters) that correspond to the modeled connections. NNs operate by accepting data into a set of input neurons that often have many outgoing connections to other neurons. At each traversal between neurons, the corresponding weight modifies the input and is tested against a threshold at the destination neuron. If the weighted value exceeds the threshold, the value is again weighted, or transformed through a nonlinear function, and transmitted to another neuron further down the NN graph-if the threshold is not exceeded then, generally, the value is not transmitted to a down-graph neuron and the synaptic connection remains inactive. The process of weighting and testing continues until an output neuron is reached; the pattern and values of the output neurons constituting the result of the NN processing.

The optimal operation of most NNs relies on accurate weights. However, NN designers do not generally know which weights will work for a given application. NN designers typically choose a number of neuron layers or specific connections between layers including circular connections. A training process may be used to determine appropriate weights by selecting initial weights.

In some examples, initial weights may be randomly selected. Training data is fed into the NN, and results are compared to an objective function that provides an indication of error. The error indication is a measure of how wrong the NN's result is compared to an expected result. This error is then used to correct the weights. Over many iterations, the weights will collectively converge to encode the operational data into the NN. This process may be called an optimization of the objective function (e.g., a cost or loss function), whereby the cost or loss is minimized.

A gradient descent technique is often used to perform objective function optimization. A gradient (e.g., partial derivative) is computed with respect to layer parameters (e.g., aspects of the weight) to provide a direction, and possibly a degree, of correction, but does not result in a single correction to set the weight to a "correct" value. That is, via several iterations, the weight will move towards the "correct," or operationally useful, value. In some implementations, the amount, or step size, of movement is fixed (e.g., the same from iteration to iteration). Small step sizes tend to take a long time to converge, whereas large step sizes may oscillate around the correct value or exhibit other undesirable behavior. Variable step sizes may be attempted to provide faster convergence without the downsides of large step sizes.

Backpropagation is a technique whereby training data is fed forward through the NN-here "forward" means that the data starts at the input neurons and follows the directed graph of neuron connections until the output neurons are reached-and the objective function is applied backwards through the NN to correct the synapse weights. At each step in the backpropagation process, the result of the previous step is used to correct a weight. Thus, the result of the output neuron correction is applied to a neuron that connects to the output neuron, and so forth until the input neurons are reached. Backpropagation has become a popular technique to train a variety of NNs. Any well-known optimization algorithm for back propagation may be used, such as stochastic gradient descent (SGD), Adam, etc.

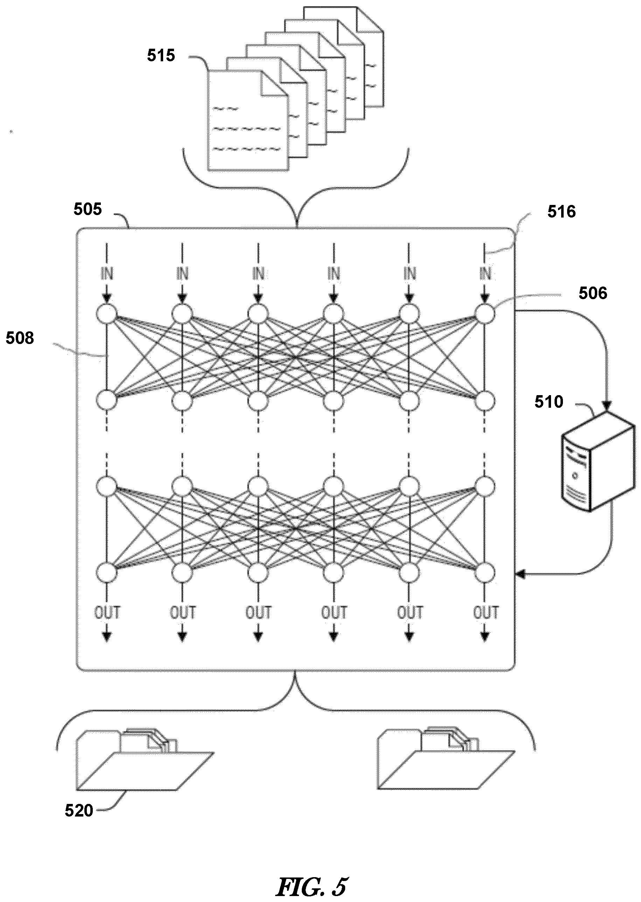

FIG. 5 is a block diagram of an example of an environment including a system for neural network (NN) training. The system includes an artificial NN (ANN) 505 that is trained using a processing node 510. The processing node 510 may be a central processing unit (CPU), graphics processing unit (GPU), field programmable gate array (FPGA), digital signal processor (DSP), application specific integrated circuit (ASIC), or other processing circuitry. In an example, multiple processing nodes may be employed to train different layers of the ANN 505, or even different nodes 506 within layers. Thus, a set of processing nodes 510 is arranged to perform the training of the ANN 505. The communications manager 224, LLM 228, or other component of the system 200, can be trained using the system of FIG. 5.

The set of processing nodes 510 is arranged to receive a training set 515 for the ANN 505. The ANN 505 comprises a set of nodes 506 arranged in layers (illustrated as rows of nodes 506) and a set of inter-node weights 508 (e.g., parameters) between nodes in the set of nodes. In an example, the training set 515 is a subset of a complete training set. Here, the subset may enable processing nodes with limited storage resources to participate in training the ANN 505.

The training data may include multiple numerical values representative of a domain, such as an image feature, or the like. Each value of the training or input 515 to be classified after ANN 505 is trained, is provided to a corresponding node 506 in the first layer or input layer of ANN 505. The values propagate through the layers and are changed by the objective function.

As noted, the set of processing nodes is arranged to train the neural network to create a trained neural network. After the ANN is trained, data input into the ANN will produce valid classifications 520 (e.g., the input data 515 will be assigned into categories), for example. The training performed by the set of processing nodes 506 is iterative. In an example, each iteration of the training the ANN 505 is performed independently between layers of the ANN 505. Thus, two distinct layers may be processed in parallel by different members of the set of processing nodes. In an example, different layers of the ANN 505 are trained on different hardware. The members of different members of the set of processing nodes may be located in different packages, housings, computers, cloud-based resources, etc. In an example, each iteration of the training is performed independently between nodes in the set of nodes. This example is an additional parallelization whereby individual nodes 506 (e.g., neurons) are trained independently. In an example, the nodes are trained on different hardware.

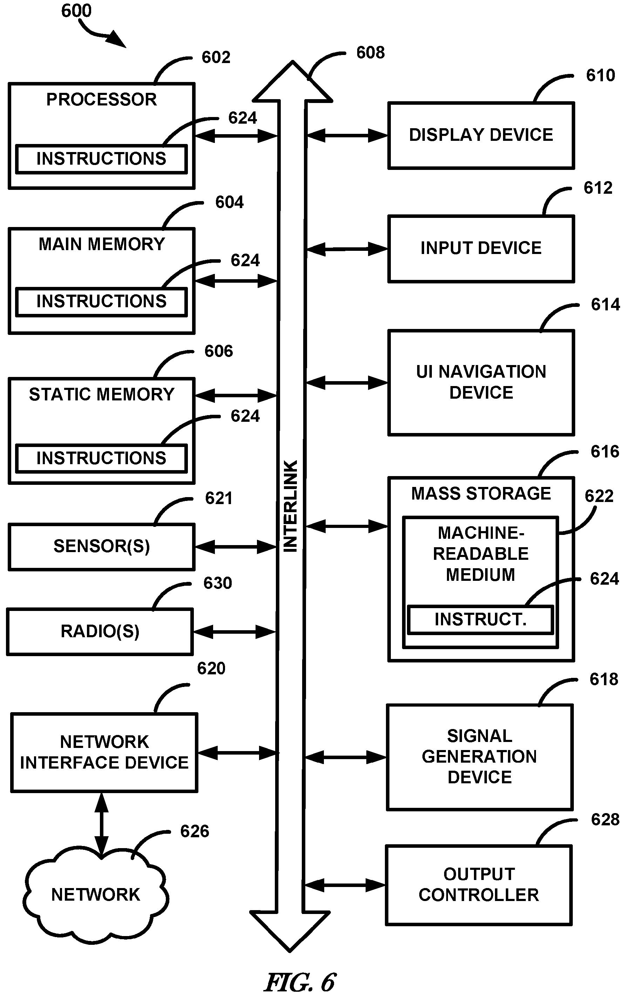

FIG. 6 illustrates, by way of example, a block diagram of an embodiment of a machine in the example form of a computer system 600 within which instructions, for causing the machine to perform any one or more of the methods or techniques discussed herein, may be executed. One or more of the communications manager 224, LLM 228, knowledge graph 230, applications 232, 234, 236, 238, method 400, system of FIGS. 1, 2, or other component, operation, or technique, can include, or be implemented or performed by one or more of the components of the computer system 600. In a networked deployment, the machine may operate in the capacity of a server or a client machine in server-client network environment, or as a peer machine in a peer-to-peer (or distributed) network environment. The machine may be a personal computer (PC), server, a tablet PC, a cellular telephone, a web appliance, a network router, switch or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 600 includes a processor 602 (e.g., a central processing unit (CPU), a graphics processing unit (GPU) or both), a main memory 604 and a static memory 606, which communicate with each other via a bus 608. The computer system 600 may further include a video display unit 610 (e.g., a liquid crystal display (LCD) or a cathode ray tube (CRT)). The computer system 600 also includes an alphanumeric input device 612 (e.g., a keyboard), a user interface (UI) navigation device 614 (e.g., a mouse), a mass storage unit 616, a signal generation device 618 (e.g., a speaker), a network interface device 620, and a radio 630 such as Bluetooth, WWAN, WLAN, and NFC, permitting the application of security controls on such protocols.

The mass storage unit 616 includes a machine-readable medium 622 on which is stored one or more sets of instructions and data structures (e.g., software) 624 embodying or utilized by any one or more of the methodologies or functions described herein. The instructions 624 may also reside, completely or at least partially, within the main memory 604 and/or within the processor 602 during execution thereof by the computer system 600, the main memory 604 and the processor 602 also constituting machine-readable media.

While the machine-readable medium 622 is shown in an example embodiment to be a single medium, the term "machine-readable medium" may include a single medium or multiple media (e.g., a centralized or distributed database, and/or associated caches and servers) that store the one or more instructions or data structures. The term "machine-readable medium" shall also be taken to include any tangible medium that is capable of storing, encoding, or carrying instructions for execution by the machine and that cause the machine to perform any one or more of the methodologies of the present invention, or that is capable of storing, encoding, or carrying data structures utilized by or associated with such instructions. The term "machine-readable medium" shall accordingly be taken to include, but not be limited to, solid-state memories, and optical and magnetic media. Specific examples of machine-readable media include non-volatile memory, including by way of example semiconductor memory devices, e.g., Erasable Programmable Read-Only Memory (EPROM), Electrically Erasable Programmable Read-Only Memory (EEPROM), and flash memory devices; magnetic disks such as internal hard disks and removable disks; magneto-optical disks; and CD-ROM and DVD-ROM disks.

The instructions 624 may further be transmitted or received over a communications network 626 using a transmission medium. The instructions 624 may be transmitted using the network interface device 620 and any one of a number of well-known transfer protocols (e.g., HTTPS). Examples of communication networks include a local area network ("LAN"), a wide area network ("WAN"), the Internet, mobile telephone networks, Plain Old Telephone (POTS) networks, and wireless data networks (e.g., WiFi and WiMax networks). The term "transmission medium" shall be taken to include any intangible medium that is capable of encoding, or carrying instructions for execution by the machine, and includes digital or analog communications signals or other intangible media to facilitate communication of such software.

### Additional Examples

Example 1 includes a method comprising receiving, from a first two-way wireless communications device and at a communications manager, a first communication, determining, by the communications manager, that the first communication includes (i) a question or (ii) a standard communication that has a standard response in accord with two-way radio transceiver etiquette, responsive to determining that the first communication includes the question or (i) a question or (ii) a standard communication that has a standard response in accord with two-way radio transceiver etiquette, generating, by the communications manager, a response to the first communication, and transmitting the response to the first two-way wireless communications device.

In Example 2, Example 1 further includes, wherein determining, by the communications manager, that the first communication includes (i) a question or (ii) a standard communication that has a standard response in accord with two-way radio transceiver etiquette includes determining the first communication includes a question, and the method further comprises, responsive to determining the first communication includes a question generating a prompt for a large language model (LLM) to answer the question.

In Example 3, Example 2 further includes, wherein the prompt is engineered to cause the LLM to issue a query to a knowledge graph, a communications history database, an application programming interface (API), or a combination thereof.

In Example 4, Example 3 further includes, wherein the prompt includes a first schema for querying the knowledge and a second schema for querying the communications history database.

In Example 5, Example 4 further includes, wherein generating the response includes receiving, by the communications manager, a response to the prompt.

In Example 6, Example 5 further includes, wherein generating the response further includes altering, by the communications manager, the response in accord with two-way transceiver etiquette resulting in an altered response.

In Example 7, Example 6 further includes, wherein generating the response further includes converting, by the communications manager, the altered response from text form to audio form resulting in an altered audio response.

In Example 8, at least one of Examples 1-7 further includes, wherein determining, by the communications manager, that the first communication includes (i) a question or (ii) a standard communication that has a standard response in accord with two-way radio transceiver etiquette includes determining, by the communications manager, that the first communication includes a standard communication that has a standard response in accord with two-way radio transceiver etiquette.

In Example 9, Example 8 further includes, wherein generating the response includes determining, by the communications manager issuing a query of a communications history database, the standard response.

In Example 10, at least one of Examples 3-9 further includes, wherein the knowledge graph includes nodes that represent respective objects of aviation operations management and edges that represent relationships between the objects, wherein the knowledge graph is populated by applications that manage aviation operations facility data in real time.

Example 11 includes a system comprising a first two-way wireless communications device configured to generate a first communication a communications manager configured to receive the first communication and determine whether the first communication includes (i) a question or (ii) a standard communication that has a standard response in accord with two-way radio transceiver etiquette, responsive to determining that the first communication includes the (i) question or (ii) standard communication that has a standard response in accord with two-way radio transceiver etiquette, generate a response to the first communication, and transmit the response to the first two-way wireless communications device.

In Example 12, Example 11 further includes, wherein the communications manager is further configured to responsive to determining the first communication includes a question generate a prompt for a large language model (LLM) to answer the question.

In Example 13, Example 12 further includes, wherein the prompt is engineered to cause the LLM to issue a query to a knowledge graph, a communications history database, an application programming interface (API), or a combination thereof.

In Example 14, Example 13 further includes, wherein the prompt includes a first schema for querying the knowledge and a second schema for querying the communications history database.

In Example 15, Example 14 further includes, wherein generating the response includes receiving, by the communications manager, a response to the prompt.

In Example 16, Example 15 further includes, wherein generating the response further includes altering the response in accord with two-way transceiver etiquette resulting in an altered response.

In Example 17, Example 16 further includes, wherein generating the response further includes converting the altered response from text form to audio form resulting in an altered audio response.

Example 18 includes a non-transitory machine-readable medium including instructions that, when executed by a machine, cause the machine to perform operations for aviation operations management, the operations comprising receiving, from a first two-way wireless communications device and at a communications manager, a first communication, determining, by the communications manager, that the first communication includes (i) a question or (ii) a standard communication that has a standard response in accord with two-way radio transceiver etiquette, responsive to determining that the first communication includes the question or (i) a question or (ii) a standard communication that has a standard response in accord with two-way radio transceiver etiquette, generating, by the communications manager, a response to the first communication, and transmitting the response to the first two-way wireless communications device.

In Example 19, Example 18 further includes, wherein determining, by the communications manager, that the first communication includes (i) a question or (ii) a standard communication that has a standard response in accord with two-way radio transceiver etiquette includes determining, by the communications manager, that the first communication includes a standard communication that has a standard response in accord with two-way radio transceiver etiquette.

In Example 20, Example 19 further includes, wherein generating the response includes determining, by the communications manager issuing a query of a communications history database, the standard response.

Although teachings have been described with reference to specific example teachings, it will be evident that various modifications and changes may be made to these teachings without departing from the broader spirit and scope of the teachings. Accordingly, the specification and drawings are to be regarded in an illustrative rather than a restrictive sense. The accompanying drawings that form a part hereof, show by way of illustration, and not of limitation, specific teachings in which the subject matter may be practiced. The teachings illustrated are described in sufficient detail to enable those skilled in the art to practice the teachings disclosed herein. Other teachings may be utilized and derived therefrom, such that structural and logical substitutions and changes may be made without departing from the scope of this disclosure. This Detailed Description, therefore, is not to be taken in a limiting sense, and the scope of various teachings is defined only by the appended claims, along with the full range of equivalents to which such claims are entitled.

## Claims

1. A method comprising:
Receiving (440), from a first two-way wireless communications device and at a communications manager, a first communication;
Determining (442), by the communications manager, that the first communication includes (i) a question or (ii) a standard communication that has a standard response in accord with two-way radio transceiver etiquette;
responsive to determining that the first communication includes the question or (i) a question or (ii) a standard communication that has a standard response in accord with two-way radio transceiver etiquette, generating (444), by the communications manager, a response to the first communication; and
transmitting (446) the response to the first two-way wireless communications device.

2. The method of claim 1, wherein:
determining, by the communications manager, that the first communication includes (i) a question or (ii) a standard communication that has a standard response in accord with two-way radio transceiver etiquette includes determining the first communication includes a question; and
the method further comprises, responsive to determining the first communication includes a question generating a prompt for a large language model (LLM) to answer the question.

3. The method of claim 2, wherein the prompt is engineered to cause the LLM to issue a query to a knowledge graph, a communications history database, an application programming interface (API), or a combination thereof.

4. The method of claim 2 or 3, wherein the prompt includes a first schema for querying the knowledge and a second schema for querying the communications history database.

5. The method of any of claims 1 to 4, wherein generating the response includes receiving, by the communications manager, a response to the prompt, or wherein generating the response further includes altering, by the communications manager, the response in accord with two-way transceiver etiquette resulting in an altered response, or wherein generating the response further includes converting, by the communications manager, the altered response from text form to audio form resulting in an altered audio response.

6. The method of any preceding claim, wherein:
determining, by the communications manager, that the first communication includes (i) a question or (ii) a standard communication that has a standard response in accord with two-way radio transceiver etiquette includes determining, by the communications manager, that the first communication includes a standard communication that has a standard response in accord with two-way radio transceiver etiquette.

7. The method of any preceding claim, wherein generating the response includes determining, by the communications manager issuing a query of a communications history database, the standard response.

8. The method of claim 3, wherein the knowledge graph includes nodes that represent respective objects of aviation operations management and edges that represent relationships between the objects, wherein the knowledge graph is populated by applications that manage aviation operations facility data in real time.

9. A system comprising:
a first two-way wireless communications device configured to generate a first communication;
a communications manager (224) configured to:
receive the first communication and determine whether the first communication includes (i) a question or (ii) a standard communication that has a standard response in accord with two-way radio transceiver etiquette;
responsive to determining that the first communication includes the (i) question or (ii) standard communication that has a standard response in accord with two-way radio transceiver etiquette, generate a response to the first communication; and
transmit the response to the first two-way wireless communications device.

10. The system of claim 9, wherein the communications manager (224) is further configured to responsive to determining the first communication includes a question generate a prompt for a large language model (LLM) to answer the question.

11. The system of claim 9 or 10, wherein the prompt is engineered to cause the LLM to issue a query to a knowledge graph, a communications history database, an application programming interface (API), or a combination thereof, or . wherein the prompt includes a first schema for querying the knowledge and a second schema for querying the communications history database.

12. The system of any of claims 9 to 11, wherein generating the response includes receiving, by the communications manager, a response to the prompt.

13. The system of any of claims 9 to 12, wherein generating the response further includes altering the response in accord with two-way transceiver etiquette resulting in an altered response, or wherein generating the response further includes converting the altered response from text form to audio form resulting in an altered audio response.

14. A non-transitory machine-readable medium including instructions that, when executed by a machine, cause the machine to perform operations for aviation operations management, the operations comprising:
receiving (440), from a first two-way wireless communications device and at a communications manager, a first communication;
determining (442), by the communications manager, that the first communication includes (i) a question or (ii) a standard communication that has a standard response in accord with two-way radio transceiver etiquette;
responsive to determining that the first communication includes the question or (i) a question or (ii) a standard communication that has a standard response in accord with two-way radio transceiver etiquette, generating (444), by the communications manager, a response to the first communication; and
transmitting (446) the response to the first two-way wireless communications device.

15. The non-transitory machine-readable medium of claim 14, wherein:
determining, by the communications manager, that the first communication includes (i) a question or (ii) a standard communication that has a standard response in accord with two-way radio transceiver etiquette includes determining, by the communications manager, that the first communication includes a standard communication that has a standard response in accord with two-way radio transceiver etiquette, and optionally wherein generating the response includes determining, by the communications manager issuing a query of a communications history database, the standard response.
